(19) Europäisches Patentamt
European Patent Office
Office européen des brevets

(11) Publication number: **0 310 681**
**A1**

(12) # EUROPEAN PATENT APPLICATION

published in accordance with Art. 158(3) EPC

(21) Application number: **88903379.1**

(22) Date of filing: **15.04.88**

Data of the international application taken as a basis:

(86) International application number:
**PCT/JP88/00380**

(87) International publication number:
**WO88/08016 (20.10.88 88/23)**

(51) Int. Cl.³: **C 08 L 71/00**
C 08 G 59/40

(30) Priority: **15.04.87 JP 92688/88**

(43) Date of publication of application:
**12.04.89 Bulletin 89/15**

(84) Designated Contracting States:
**DE FR GB IT NL**

(71) Applicant: **MITSUI PETROCHEMICAL INDUSTRIES, LTD.**
**2-5, Kasumigaseki 3-chome Chiyoda-ku**
**Tokyo 100(JP)**

(71) Applicant: **NEC CORPORATION**
**33-1, Shiba 5-chome, Minato-ku**
**Tokyo 108(JP)**

(72) Inventor: **YAMAMOTO, Yohzoh**
**4-1, Yusyudai-nishi 2-chome Ichihara-shi**
**Chiba 299-01(JP)**

(72) Inventor: **IWATA, Tadao**
**912, Shiinazaki-cho Chiba-shi**
**Chiba 280-02(JP)**

(72) Inventor: **FUJIMOTO, Jun**
**NEC Corporation 33-1, Shiba 5-chome**
**Minato-ku Tokyo 108(JP)**

(72) Inventor: **YAMAUCHI, Fumio**
**NEC Corporation 33-1, Shiba 5-chome**
**Minato-ku Tokyo 108(JP)**

(74) Representative: **Myerscough, Philip Boyd et al,**
**J.A.Kemp & Co. 14, South Square Gray's Inn**
**London, WC1R 5EU(GB)**

(54) **COMPOSITION FOR VIBRATION DAMPER.**

(57) A composition for vibration damper comprising a polyol resin (A), a hydrocarbon resin (B) having a softening point of up to 25°C when measured according to Durran's method, and a curing agent (C), said polyol resin (A) being obtained by reacting a substantially epoxy-free polyol resin (1) obtained by reaction between a specific bisphenol epoxy resin (a) and an active hydrogen compound (b) having a hydrogen atom reactive with an epoxy group with a monobasic fatty acid (2). This composition for vibration damper is constituted of a specified polyol resin (A), a hydrocarbon resin (B) as the plasticizer, and a curing agent (C), and a vibration damper obtained by curing this composition has about the same durability as that of the similar conventional vibration dampers based on an epoxy resin and shows excellent vibration damping properties not only near the phase transition point but at a wide range of temperatures, thus being usable at a wide range of temperatures.

EP 0 310 681 A1

TITLE MODIFIED
see front page

TITLE

VIBRATION DAMPING COMPOSITIONS

## FIELD OF THE INVENTION

This invention relates to a vibration damping composition, comprising a polyol resin derived from an epoxy resin, a specific plasticizer and a curing agent. More particularly, it relates to such a composition which is capable of providing a vibration damper having excellent vibration damping properties of a wide temperature range.

## BACKGROUND OF THE INVENTION

In order that vibration from a source of vibration will not be transferred to other portions, it has heretofore been widely practiced to allow an antivibration rubber or air spring to stand at the contacting portion between the source of vibration and other portions. In these procedures, however, no attenuation of the vibration itself of the source of vibration can be expected, even though the transfer of vibration can be inhibited.

On that account, there has been adopted a procedure wherein a vibration damper is allowed to adhere to a vibrating body so as to attenuate the vibration itself of the vibrating body. In the case of using the

vibration damper in the manner as mentioned above, attenuation of the vibration is aimed at by converting vibration energy into heat.

In inhibiting vibration of a vibrating body by the use of a vibration sampler, when amplitude of adjacent vibrations in an attenuation sine wave are taken as $X_1$ and $X_2$, respectively, there is obtained an excellent vibration inhibitory effect if a logarithmic decrement $\Delta$ represented by the following equation (1) becomes larger.

$$\Delta = \ln (x_1/x_2) \qquad \ldots (1)$$

The logarithmic decrement itself is represented by the following equation (2) using dissipation factor $\eta$.

$$\Delta = \pi \eta \qquad \ldots (2)$$

Accordingly, it may be said that a vibration damper having a larger loss factor $\eta$ has excellent characteristics.

In using such a vibration damper in practice, there are a case wherein the vibration damper is used by simply pasting it on a source of vibration (extensional type) and a case wherein the vibration damper is used by inserting it between a source of vibration and a constraint plate (constrainted shear type).

In the constraint shear damping materials which is used by inserting it between the vibtrating body and the constraint plate, a loss factor $\eta$ is represented

approximately by the following equation (3).

$$\eta = \frac{12 \cdot \frac{E_3h_3}{E_1h_3}\left(\frac{h_{31}}{h_1}\right)^2 g}{1 + 2g + (1 + \eta_2{}^2)g^2}\eta_2 \qquad \ldots (3)$$

wherein $E_1$ is Young's modulus of the vibrating body and $E_3$ is Young's modulus of the constraint plate, $h_1$ is a thickness of the vibrating body and $h_3$ is a thickness of the constraint plate, $h_{31}$ is equal to $h_2 + (h_1 + h_3)/2$, $h_2$ is a thickness of the vibration damper, $\eta_2$ is a loss factor of the vibration damper itself, and g is a share parameter represented by the following equations (4) and (5).

$$g = \frac{f_s}{f} \qquad \ldots (4)$$

$$f_s = \frac{G_2h_1}{4\pi E_3h_3h_2}\sqrt{\frac{E_1}{3\rho_1}} \qquad \ldots (5)$$

wherein $G_2$ is a shear modulus of the vibration damper and $\rho_1$ is a density of the vibrating body.

It is understood from the above-mentioned equations that preferable as the vibration dampers are those having a larger loss factor $\eta_2$ and a smaller shear modulus.

In addition to such vibration damping performance as mentioned above, the properties required of the vibration dampers for their practical applicability are excellent moldability, mechanical strength, water resistance, and chemical resistance.

As vibration damping compositions used for forming such vibration dampers as referred to above, there have heretofore been used those primarily comprised of polyamide resins, polyvinyl chloride resins or epoxy resins.

However, vibration dampers formed from the vibration damping compositions primarily comprised of polyamide resins had such problems that the conditions under which they are used are limited since they are poor in water resistance and chemical resistance and, moreover, they are low in mechanical strength. Further, the vibration damping compositions primarily comprised of polyvinyl chloride resins had such problems that it is difficult to form them into vibration dampers having

complicated shapes and further that the production of vibration dampers of many species but in small quantity requires an increased cost of production. While vibration dampers formed from the vibration damping compositions primarily comprised of epoxy resins do not suffer from the problems as discussed above, they have posed the following problem which has also been associated with vibration dampers formed from the above-mentioned polyamide and polyvinyl chloride resin compositions. Namely, a vibration damper generally has the largest loss factor $\eta$ at its phase transition point (glass transition or melting point). Accordingly, it has been practiced to adjust the phase transition point of the material by addition or copolymerization of a plasticizer so that it may come near the service temperature of the vibration damper. Even though the loss factor of the prior art vibration damper is very large at the phase transition point, it becomes drastically decreased at temperatures slightly above or below the phase transition point. In other words, the prior art vibration dampers have a very sharp curve of loss factor versus temperature, leading to a narrow service temperature range extremely limited to near the phase transition point.

## OBJECT OF THE INVENTION

The invention is intended to solve the above-discussed problems associated with the prior art and an object of the invention is to provide a vibration damping composition capable of providing a vibration damper which exhibits excellent vibration damping performances over a wide temperature range and having excellent durability and moldability.

## SUMMARY OF THE INVENTION

A vibration damping composition according to the invention comprises a polyol resin [A], a hydrocarbon resin [B] having a softening point, measured by a Durance method, of not higher than 25°C. and a curing agent [C], said polyol resin [A] obtained by reacting a bisphenol epoxy resin (a) of the formula [I] noted below with at least one compound (b) having at least one active hydrogen atom reactive with an epoxy group to provide a polyol resin [1] substantially free from an epoxy group, followed by a reaction of the so prepared polyol resin [1] with a monobasic fatty acid [2]:

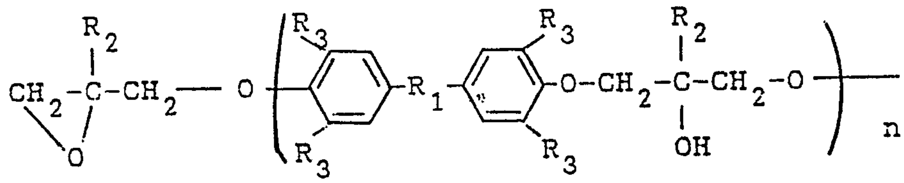

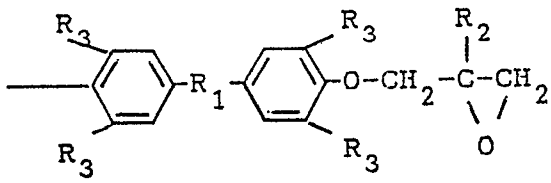

...[I]

wherein $R_1$ is $-CH_2-$, 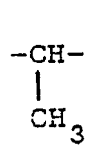, 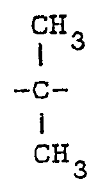, 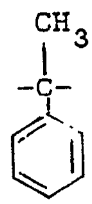,

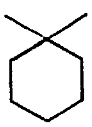, 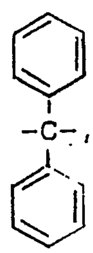, 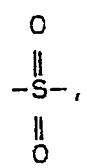, or -O-;

$R_2$ is a hydrogen atom or methyl; $R_3$ is a hydrogen or halogen atom; n is the number of the recurring units and may be zero; and the $R_1$s, $R_2$s and $R_3$s each may be the same or different.

The vibration damping composition according to the invention comprising a specific polyol resin [A], a hydrocarbon resin [B] having a softening point, measured by a Durance method, of not higher than 25°C. and a curing agent [C], can be cured to a vibration damper which has a durability well comparable with that of known epoxy resin

vibration dampers and which can exhibits excellent vibration damping performances not only at temperatures near its phase transition point but also over a wide temperature range, and thus can be effectively used over a wide range of service temperatures.

## DETAILED DESCRIPTION OF THE INVENTION

The invention will now be described in detail.

The polyol resins [A] which can be used herein are derived from bisphenol epoxy resins (a) of the general formula [I]. The bisphenol epoxy resins (a) in themselves and processes for the preparation thereof are known in the art. Typically, they can be prepared by reacting a bisphenol with a haloepoxide such as epichlorohydrin or beta-methyl epichlorohydrin. They may also be prepared by reactions of phenol or a 2,6,-dihalophenol with an aldehyde or ketone such as formaldehyde, acetoaldehyde, acetone, acetophenone, cyclohexanone and benzophenone, by oxidation of bis(hydroxyphenyl) sulfide with a peracid, or by etherification of hydroquinones.

The bisphenol epoxy resin (a) Of the formula [I] is then reacted with at least one compound (b) having at least one active hydrogen atom reactive with an epoxy group to provide a polyol resin [1] substantially free from an epoxy group.

As the compound (b) having at least one active hydrogen atom, use can be made of the following compounds;

(i). secondary amines having from 3 to 20 carbon atoms, including, for example, diethanolamine, diisopropanolamine, dipentanolamine, N-methylethanolamine, N-ethylpropanolamine diethylamine, N-ethylaniline and N-ethanolaniline;

(ii). phenols having from 6 to 25 carbon atoms, including, for example, phenol, cresols, isopropylphenols amylphenols, nonylphenols, dodecylphenols, xylenols and hydroxyethylphenols;

(iii). monobasic fatty acids having from 2 to 30 carbon atoms, preferably having from 8 to 30 carbon atoms, including, for example, acetic acid, propionic acid, valerianic acid, caprylic acid, lauric acid, mylristic acid, palmitic acid, stearic acid, hydroxystearic acid, acrylic acid, crotonic acid, methacrylic acid, angelic acid, elaidic acid, gluconic acid, glycolic acid, lactic acid, hydroxybutyric acids, hydroxyvalerianic acids, hydroxycaproic acids, tartaric acid, citric acid, castor oil fatty acids, dehydrated castor oil fatty acids, tall oil fatty acids, linoleic acids, linolenic acid, undecylenic acid and erucic acid; and,

(iv). alcohols having from 1 to 30 carbon atoms, including, for example, methanol, ethanol, butanols,

octanols, ethylene glycol, propylene glycol, 1,6-hexanediol, diethylene glycol and triethylene glycol.

The reaction between the bisphenol epoxy resin (a) of the formula [I] and the active hydrogen-containing compound (b) is carried out at a temperature of from about 50 to about 250°C., preferably from about 100 to about 200°C. normally in the presence of a catalyst, using such proportions of the reactants that an equivalent ratio of epoxy group in (a) to active hydrogen in (b) is from 1/0.6 to 1/3, preferably from 1/0.8 to 1/1.1. Reaction temperatures substantially lower than about 50°C. are not preferred, since the reaction velocity is unpractically slow, while reaction temperatures in excess of about 250°C. are not preferred because ring opening reactions between epoxy and hydroxyl groups in the epoxy resin or between epoxy groups tend to occur, which may lead to gelation of the reaction product.

Catalysts usable in the reaction mentioned above include, alkali metal hydroxides such as sodium, potassium and lithium hydroxides; alkali metal alcoholates such as sodium methylate; tertiary amines such as dimethylbenzylamine, triethylamine and pyridine; quaternary ammonium salts such as teramethylammonium chloride and benzyltrimethylammonium chloride; organic phosphorus compounds such as triphenylphosphine and

triethylphosphine: quaternary phosphonium salt such as an adduct of triphenylphosphine and methyl iodide; alkali metal salts such as sodium carbonate and lithium chloride; Lewis acids such as boron trifluoride, aluminium chloride, tin tetrachloride and a complex of boron trifluoride with diethyl ether.

While the amount of the catalyst used may vary depending upon the reaction temperature, it is normally within the range between 0.01 and 10000 ppm by weight, preferably between 0.1 and 1000 ppm by weight per one part by weight of the epoxy resin (a). Incidentally, the secondary amines act as a catalyst, and therefore, when the bisphenol epoxy resin (a) of the formula [I] is reacted with a secondary amine as the active hydrogen-containing compound (b), it is not necessary to use any additional catalyst.

In carrying out the reaction a solvent may or may not be used. When the reaction is carried out in the presence of a solvent, the solvent should be free from an active hydrogen atom and ester group, including, for example, hydrocarbons such as toluene and xylene; and ketones such as methyl isobutyl ketone, methyl ethyl ketone and cyclohexanone.

The bisphenol epoxy resin (a) may be reacted with two or more compounds (b) having at least one active

hydrogen atom. In this instance, the two or more compounds (b) may be reacted with the epoxy resin (a) simultaneously or in sequence. When the bisphenol epoxy resin (a) is to be reacted with a secondary amine and a compound (b) other than the secondary amine, it may be reacted with the latter in the presence of a catalytic amount of the former, followed by reaction with the remaining amount of the former.

If desired, the reaction between the epoxy resin (a) of the formula [I] and the active hydrogen-containing compound (b) may be carried out in the presence of a dibasic or polybasic phenol such as Bisphenol A so as to simultaneously effect chain extension of the resin. In this case at least a part of the dibasic or polybasic phenol may be replaced with a primary amine such as stearylamine.

A polyol resin [1] substantially free from an epoxy group, obtained by the reaction between the bisphenol epoxy resin (a) of the formula [I] and at least one compound (b) having at least one active hydrogen atom, is then reacted with a monobasic fatty acid [2] to provide a polyol resin [A].

Proportions of the reactants can be such that an equivalent ratio of OH in [1] to COOH in [2] is from 1/0.9 to 1/0.1.

As the monobasic fatty acid [2] use can be made of saturated and unsaturated monocarboxylic acids having from 3 to 30 carbon atoms, including, for example, propionic acid, caprylic acid, lauric acid, palmitic acid, stearic acid, castor oil fatty acids, dehydrated castor oil fatty acids, tall oil fatty acids, linoleic acid and linolenic acid.

The reaction may be carried out at a temperature of from about 150°C. to about 300°C. in the presence or absence of a catalyst and solvent. At temperatures substantially lower than about 150°C. the reaction velocity is unpractically slow, while at temperatures in excess of about 300°C. the resin product may be deteriorated.

Catalysts usable in the above reaction include, for example, organic and inorganic compounds of titanium such as tetrabutyl titanate, tetraethyl titanate, butoxytitanium trichloride and titanium tetrachloride; organic and inorganic compounds of aluminum such as triethylaluminum, diethylaluminum chloride and aluminum trichloride; organic and inorganic compounds of zinc such as diethyl zinc and zinc chloride; organic and inorganic compounds of tin such as dibutyltin laurate and stanous chloride; acids such as boron trifluoride, p-toluenesulfonic acid and phosphoric acid; alkali metals

and complexes thereof such as lithium, sodium, sodimnaphthalene and potassiumbenzophenone; alkali metal hydroxides such as lithium hydroxide and sodium hydroxide; alkali metal salts such as sodium carbonate and lithium acetate; alkali metal hydrides such as lithium hydride and sodium hydride; and tertiary amines such as triethylamine and pyridine.

The catalyst may be used in an amount of from about 0.01 to about 1000 ppm by weight, preferably from about 0.1 to about 500 ppm by weight, per one part by weight of the polyol resin [1] having substantially no epoxy group.

When the reaction is carried out in the presence of a solvent, use is made of a solvent having no active hydrogen, including, for example, toluene, xylene; methyl isobutyl ketone, methyl ethyl kenton and cyclohexanone.

A vibration damping composition according to the invention comprises a polyol resin [A] obtained in the manner as described above, a hydrocarbon resin [B] having a softening point, measured by a Durance method, of not higher than 25°C. and a curing agent [C]. As the hydrocarbon resin [B] use can be made of the following resins;

(i). condensates of a monomeric component primarily comprised of an alkylbenzene with formaldehyde,

including, for example, xylene resins and xylene-alkylphenol resins;

(ii). condensates of a monomeric component primarily comprised of a ketone such as acetophenone and cyclohexanone with formaldehyde, including, for example, ketone resins;

(iii). condensates of a monomeric component primarily comprised of a coumarone with formaldehyde, including, for example, coumarone resins and coumarone-indene resins; and

(iv). polymers of a monomeric component primarily comprised of an unsaturated hydrocarbon, including, for example, aliphatic, alicyclic and aromatic petroleum resins and hydrogenated products thereof; synthetic terpene resins; polymers of styrene or its derivative; copolymers of styrene or its derivative with an alkylphenol; polymers and copolymers of alphamethylstyrene or its derivative; copolymers of dicyclopentadiene and toluene; copolymers of dicyclopentadiene and vinyl acetate, and hydrolized products thereof; and rosin esters and resins obtained by transesterification of a rosin ester with a polyhydric alcohol.

A weight ratio of the hydrocarbon resin [B] to the polyol resin [A] is preferably from 20/100 to 500/100.

As already stated, a vibration damping composition according to the invention comprises a polyol resin [A], a hydrocarbon resin [B] and a curing agent [C]. As the curing agent use can be made of the following compounds:

(i). polyisocyanates, including, for example, hexamethylene diisocyanate, isophorone diisocyanate, tolylene diisocyanates, xylylene diisocyanates, diphenylmethane-4,4',-diisocyanate, nathphalene-1,5-diisocyanate, triphenylmethane-4,4'4"-triisocyanate and isopropylbenzene-2,4-diisocyanate; an adduct of 3 moles of the above- mentioned polyisocyanate to one mole of trimethylolpropane; an adduct of 4 moles of the above-mentioned polyisocyanate to one mole of pentaerythritol; high molecular weight polyisocuanates (urethane prepolymers) obtained from the above-mentioned polyisocyanate and a polyol compound such as polypropylene glycol and pentaerithitol; and adducts of a phenol or alkylphenol to the above-mentioned polyisocyanate (blocked polyisocyanates); and

(ii). polymethylol compounds having methylol or blocked methylol groups, including, for example, resol. methylolmelamine and methylated or butylated melamine resins.

The curing agent [C] may be admixed with a principal mixture comprising the polyol resin [A] and the

hydrocarbon resin [B] to provide a composition according to the invention, preferably immediately before the composition is used to prepare a vibration damper.

The curing agent [C] is in such a proportion that an equivalent ratio of a hydroxyl group of the polyol resin [A] contained in the principal mixture to a functional group (isocyanate or methylol group) of the curing agent [C] may be within the range of from about 1/0.4 to about 1/1.5, preferably from about 1/0.6 to about 1/1.3.

While curing of the principal mixture having the curing agent admixed may proceed at ambient temperature, it may be effected under hearing, if desired.

If desired, the vibration damping composition according to the invention may further comprise various additives such as curing catalysts, inorganic or organic fillers for enhancing mechanical strengths of a cured product and dehydrating agents.

The curing catalysts may be curing promoters or curing retardants. Examples of usable curing promoters include, for example, tertiary amines such as N,N-dimethylaniline and dimethylbenzylamine; and organometallic compounds such as dibutyltin dilaurate and cobalt naphthenate. Examples of usable curing retardants include, for example, phenols and organic halogen

compounds.

As the fillers use can be made of inorganic fillers such as talc, clay, mica, siliceous sand, glass flake, iron oxide scale and asbestos; and organic fillers such as synthetic pulp, polyamide fibers, carbon fibers and polyester fibers.

As the dehydrating agents use can be made of calcined gypsum, molecular sieve and silica gel.

The vibration damping composition of the invention can be prepared by a conventional method. It can be prepared by intimately admixing the polyol resin [A], the hydrocarbon resin [B] having a softening point of not higher than 25°C. and the curing agent [C]., optionally together with the curing catalysts, fillers and dehydrating agents in a usual manner. The composition so prepared can be defoamed, molded into a desired shape and cured at a temperature of up to about 200°C. to provide a desired vibration damper.

## EFFECT OF THE INVENTION

A vibration damping composition according to the invention comprising a polyol resin [A], a hydrocarbon resin [B] having a softening point of not higher than 25°C. and a curing agent [C] can provide a vibration damper which has a relatively large loss factor at

temperatures fairly remote from the glass transition point of the material; and variation in the vibration damping performances of the damper with change of temperature is small. Thus, the design of vibration damping is easy according to the invention. Further the invention is of excellent practical use in that the moldability of the composition and the durability of the cured product are good.

The invention will now be illustrated by the following examples. It should be appreciated that the invention is not limited to the examples.

Example 1

(synthesis of a polyol resin)

A 3-liter separably flask equipped with a stirrer, a dropping funnel, a thermometer and a condenser having a receiver for collecting a condensate, was charged with 925 grams of a Bisphenol A epoxy resin having an epoxy equivalent of 925 g/equivalent (R-304 supplied by MITSUI Petrochemical Industries Co., Ltd.) and flushed with nitrogen. After addition of 50 grams of xylene, the resulting mixture was heated under stirring to a temperature of 120°C. by means of an oil bath. While dropwise adding 105 grams of diethanolamine from the dropping funnel under stirring, the mixture was heated to a temperature of 150°C., and the reaction was continued at

that temperature until the epoxy equivalent of the product had exceeded 20000.

To the reaction mixture 419 grams of stearic acid was added, and esterification was carried out while slowly heating the mixture to a temperature of 250°C. During the esterification water formed was azeotropically distilled together with xylene, and only the water was removed from the flask. The esterification was continued until the acid value of the product had become less than 1.

The polyol resin so prepared had a hydroxyl value of 163mg-KOH/g.

(Preparation of a vibration damping composition and curing thereof)

With 100 grams of the polyol resin as obtained above, were admixed 100 grams of a condensate of xylene and formaldehyde, which was liquid at 25°C., and had an average molecular weight of about 400 and a viscosity of 750 cps at 50°C., as a hydrocarbon resin [B] and Takenate D-170 as a curing agent. The amount of the curing agent used was such that a molar ratio of hydroxyl group in the polyol resin to isocyanate group in the curing agent OH/NCO was 1/0.8.

The composition was cured at a temperature of 120°C. for 3 hours to provide a cured product for vibration damper. The cured product was tested for its

vibration damping properties by the following methods and conditions.

(Conditions under which loss factor of vibration damper itself is measured.)

Instrument: High-frequency viscoelasticity spectrometer, manufactured and sold by Iwamoto Seisakusho K.K.

Temperature: -50 to 200°C; sample, 2 mm width x 1 mm thick x 5 mm length

Frequency: 400 Hz

Method of measurement and Principle: In the case where one end of a sample is fixed and the other end is intended to vibrate in the lengthwise direction of the sample, no measurement can be conducted in the direction toward which the sample shrinks because the sample sags. Therefore, at the outset, the sample is stretched to a given extent, and the measurement is conducted while applying dynamic displacement centering around the stretched point of the sample. This stretch given at the outset is called an initial strain ($L_s$) and a tension produced when the initial strain is given is called an initial tension ($F_s$).

When an amplitude ($\Delta E_{o-p}$) of the dynamic displacement becomes larger than the initial strain, the sample sags and the measurement comes to become

inoperable, and hence this should be brought to attention at the time when the measurement is conducted.

Complex elastic modulus (Young's modulus): $E^*$ (dyne/$cm^2$) is calculated according to the following equation using dynamic displacement :$\Delta L_{o-p}$ (cm), dynamic force produced by applying the dynamic displacement to the sample :$\Delta F_{o-p}$ (dyne), length of the sample natural length L (cm) prior to fixing the initial strain to the sample, cross-sectional area of the sample : A ($cm^2$), phase difference (Deg) between the dynamic displacement and dynamic force, and frequency of vibration (Hz).

$$E^* = \frac{\text{vibrating stress}}{\text{vibrating strain}} = \frac{(\Delta F_{o-p}/A)e^{i(\omega t+\delta)}}{(\Delta L_{o-p}/L)e^{i\omega t}}$$

$$= (\Delta F_{o-p}/\Delta L_{o-p}) \cdot (L/A) \cdot (\cos\delta + i\sin\delta)$$

Assuming $|E^*| = (\Delta F_{o-p}/\Delta L_{o-p})\ (L/A)$,

Dynamic storage elastic modulus $E' = |E^*|\cos\delta$ (dyne/cm$^2$)

Dynamic loss elastic modulus $E'' = |E^*|\sin\delta$ (dyne/cm$^2$)

Dynamic viscosity coefficient $\eta' = E'' / \omega$ (poise)

loss factor $\tan\delta = E'' / E' = \eta$

$\omega = 2\pi f$

f = frequency (Hz)

As can be seen from the foregoing, the initial strain and initial tension do not participate in the

calculation as illustrated above. The relation between E', E", $E^*$ and $\delta$ becomes as shown in Fig. 1.

A maximum value of the loss factor is shown as $\eta_{max}$, and a temperature at which $\eta_{max}$ is obtained is shown by $(T\eta)_{max}$.

Vibration damping capacity of a vibration damper when it was assembled as a constrained shear damping materials to a vibrating body was measured by the following procedure. That is, a sample of the constrained shear damping materials of a sandwich structure was prepared by fitting to an aluminum vibrating plate of 300 mm length, 30 mm width and 5 mm thick a vibration damper of 3 mm thick having the same area as in the vibrating plate and an aluminum constraining plate of 2 mm thick having the same area as in the vibrating plate, and $\eta$ of the constrained shear damping materials thus prepared was measured at a vibration frequency of 400 Hz.The maximum valur of obtained was taken as $\eta_s$. A temperature breadth which provides $\eta_s \geq 0.2$ is shown by $\Delta$ T.

The results obtained are shown in Table 1.

Example 2

Example 1 was repeated except that the epoxy resin having an epoxy equivalent of 925 of Example 1 was replaced by a combination of 600 grams of a bisphenol epoxy resin having an epoxy equivalent of 189 g/equivalent

(R-140 supplied by MITSUI Petrochemical Industries Co., Ltd.) with 264 grams of Bisphenol A; and that the diethanolamine and stearic acid were used in amounts of 91 and 380 grams, respectively. A molar ratio of hydroxyl group in the polyol resin prior to te esterification to carboxylic group in the stearic acid OH/COOH was 1/0.26.

The results are shown in Table 1.

Examples 3 to 8

Example 2 was repeated except that each of the monobasic fatty acids indicated in Table 1 was used in an indicated amount instead of the stearic acid of Example 2.

The results are shown in Table 1.

Table 1

| Example (No.) | Fatty acid (g) | | Hydroxyl value of polyol resin (mg-KOH/g) | Vibration damping properities | | | |
|---|---|---|---|---|---|---|---|
| | | | | $\eta_{max}$ | $(T\eta)_{max}$ (°C) | $(\eta_s)_{max}$ | $\Delta T$(deg) |
| 1 | stearic acid | 419 | 163 | 1.3 | 30 | 0.52 | 59 |
| 2 | stearic acid | 380 | 154 | 1.4 | 25 | 0.54 | 76 |
| 3 | caprylic acid | 230 | 189 | 1.2 | 35 | 0.50 | 50 |
| 4 | undecylenic acid | 249 | 183 | 1.2 | 35 | 0.51 | 54 |
| 5 | castor oil fatty acid | 407 | 213 | 1.3 | 35 | 0.53 | 63 |
| 6 | dehydrated castor oil fatty acid | 375 | 159 | 1.5 | 20 | 0.55 | 79 |
| 7 | tall oil fatty acid | 386 | 157 | 1.5 | 20 | 0.54 | 82 |
| 8 | linoleic acid | 375 | 163 | 1.3 | 25 | 0.52 | 57 |

Example 9

Example 7 was repeated except that the combination of the epoxy resin having an epoxy equivalent of 189 with the Bisphenol A used in Example 7 was replaced by 470 grams of Bisphenol A epoxy resin having an epoxy equivalent of 470 g/equivalent (R-301 supplied by MITSUI Petrochemical Industries CO.,Ltd.); and that the diethanolamine and tall oil fatty acid were used in amounts of 105 and 410 grams, respectively. The polyol resin so obtained had a hydroxyl value of 135mg-KOH/g.

The results are shown in Table 2.

Examples 10 to 13

Example 7 was repeated except that each of hydrocarbon resins indicated in Table 2 was used instead of the condensate of xylene and formaldehyde used in Example 7.

The results are shown in Table 2.

Examples 14 and 15

Example 7 was repeated except that the tall oil fatty acid was used in an amount indicated in Table 3.

The results are shown in Table 3.

Examples 16 and 17

Example 2 was repeated except that the 91 grams of diethanolamine used in Example 2 was replaced with each mixture of diethanolamine and p-isopropylphenol indicated

in Table 4; and that stearic acid was used in such an amount that it might provide a molar ratio of hydroxyl group in the polyol resin prior to the esterification to carboxylic group in the stearic acid OH/COOH of 1/0.26, as in Example 2.

The results are shown in Table 4.

Example 18

Example 2 was repeated except that the Bisphenol A used in Example 2 was replaced with 306 grams of stearylamine; and that the diethanolamine and stearic acid were used in amounts of 95 and 257 grams, respectively. The polyol resin obtained by the esterification had a hydroxyl value of 182 mg-KOH/g.

The results are shown in Table 5.

Examples 19 and 20

Example 7 was repeated except that the Takenate D-170N used in Example 7 as a curing agent was replaced with each isocyanate curing agent indicated in Table 5.

The results are shown in Table 5.

Table 2

| Example (No.) | | Hydrocarbon resin | | | Vibration damping properties | | | |
|---|---|---|---|---|---|---|---|---|
| | | Number average molecular weight | Softening point ($^{o}C$) | Viscosity | $\eta$ max | $(T_{\eta})$ max ($^{o}C$) | $(\eta_s)$ max | T(deg) |
| 9 | Xylene/formaldehyde decondensate | 400 | <25 | 750cps/50$^{o}$C | 1.6 | 15 | 0.56 | 87 |
| 10 | Polymer of isopropenyltoluene | 300 | <25 | ——— | 1.3 | 25 | 0.52 | 69 |
| 11 | White tarklon 505 (supplied by Yoshida oil processing Co., Ltd.) | — | <25 | 2000cps/25$^{o}$C | 1.5 | 30 | 0.54 | 80 |
| 12 | Phenol modified aromatic polymer | — | <25 | 500cps/25$^{o}$C | 1.5 | 20 | 0.55 | 84 |
| 13 | Tricyclodecene/toluene polymer | 270 | <25 | 3000cps/25$^{o}$C | 1.3 | 25 | 0.53 | 71 |

Table 3

| Example (No.) | Tall oil fatty acid (g) | Hydroxyl value of polyol resin (mg-KOH/g) | Vibration damping properities | | | |
|---|---|---|---|---|---|---|
| | | | $\eta_{max}$ | $(T\eta)_{max}$ ($^{o}C$) | $(\eta_s)_{max}$ | $\Delta T$(deg) |
| 14 | 511 | 132 | 1.7 | 10 | 0.57 | 91 |
| 15 | 263 | 193 | 1.4 | 35 | 0.53 | 63 |

Table 4

| Example (No.) | Diethanolamine (g) | p-isopropyl-phenol (g) | Stearic acid (g) | Hydroxyl value of polyol resin (mg-KOH/g) | Vibration damping properities | | | |
|---|---|---|---|---|---|---|---|---|
| | | | | | $\eta_{max}$ | $(T\eta)_{max}$ (°C) | $(\eta_s)_{max}$ | ΔT(deg) |
| 16 | 73 | 24 | 353 | 150 | 1.4 | 20 | 0.53 | 73 |
| 17 | 45 | 59 | 315 | 141 | 1.5 | 20 | 0.54 | 75 |

Table 5

| Example (No.) | Isocyanate curing agent | Vibration damping properties | | | |
|---|---|---|---|---|---|
| | | $\eta_{max}$ | $(T_\eta)_{max}$ | $(\eta_s)_{max}$ | $\Delta T$(deg) |
| 18 | Type of hexamethylene diisocyanate (Takenate D-170N, supplied by Takeda pharm, Co., Ltd.) | 1.5 | 20 | 0.55 | 85 |
| 19 | Type of polyol modified diphenylmethane-4,4'-diisocyanate (Kolonate 1040, supplied by Nippon Polyurethane Co.,Ltd.) | 1.7 | 70 | 0.57 | 81 |
| 20 | Type of carbodiimido modified diphenylmethane-4,4'-diisocyanate (Mirionate MTL supplied by Nippon Polyurethane Co.,Ltd.) | 1.8 | 65 | 0.58 | 78 |

Comparative Example

The vibration damping composition of Example 9 comprised 100 grams of the polyol resin having a hydroxyl value of 135mg-KOH/g. prepared from a Bisphenol A epoxy resin having an epoxy equivalent of 470g/equivalent, 100 grams of the hydrocarbon resin and Takenate D-170N as a curing agent. For a comparative purpose, a control composition comprising 100 grams of the Bisphenol A epoxy resin having an epoxy equivalent of 470g/equivalent, 100 grams of the hydrocarbon resin and as a curing agent 32 grams of a mixture of 100 parts by weight of 4-methyl-1,2,3,6-tetrahydrophthalic anhydride and 1 part by weight of 2,4',6-tris (dimethylaminomethyl) phenol was prepared.

The control composition was cured as in Example 9 to provide a cured product for vibration damper, which was tested for vibration damping properties as in Example 9.

The cured product exhibited $\eta_{max}$ of 1.4, $(T\eta)_{max}$ of 55°C., $(\eta_s)_{max}$ of 0.54 and $\Delta T$ of 40 deg. When compared with the results of Example 9 shown in Table 2, it is apparent that the T of the cured product of this Comparative Example is substantially narrower than that of the cured product of Example 9.

What is claimed is:

1. A vibration damping composition comprising a polyol resin [A], a hydrocarbon resin [B] having a softening point, measured by a Durance method, of not higher than 25°C. and a curing agent [C], said polyol resin [A] obtained by reacting a bisphenol epoxy resin (a) of the formula [I] noted below with at least one compound (b) having at least one active hydrogen atom reactive with an epoxy group to provide a polyol resin [1] substantially free from an epoxy group, followed by a reaction of the so prepared polyol resin [1] with a monobasic fatty acid [2]:

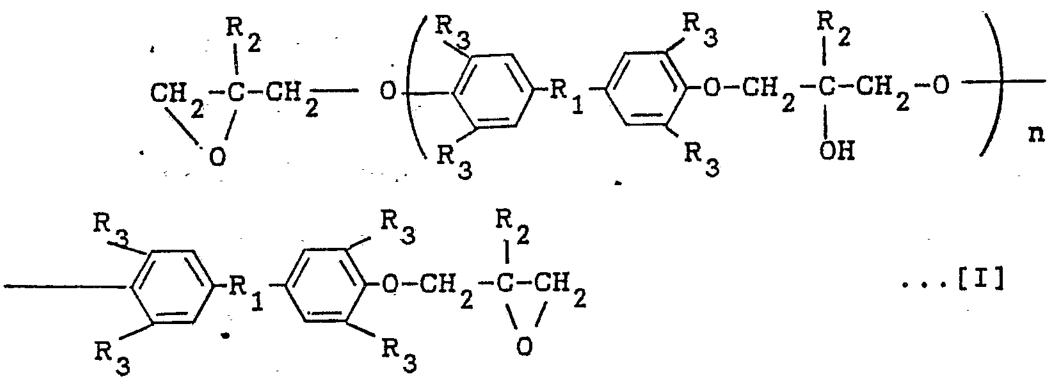

...[I]

wherein $R_1$ is $-CH_2-$, 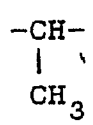 , 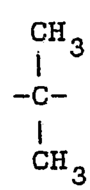 , 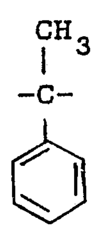 ,

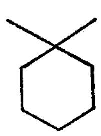 , 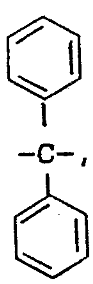 , 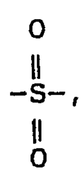 , or -o-;

$R_2$ is a hydrogen atom or methyl; $R_3$ is a hydrogen or halogen atom; n is the number of the recurring units and may be zero; and the $R_1$s, $R_2$s and $R_3$s each may be the same or different.

2. The vibration damping composition of Claim 1 wherein a weight ratio of said hydrocarbon resin [B] to said polyol resin [A] is from 20/100 to 500/100.

Figure 1

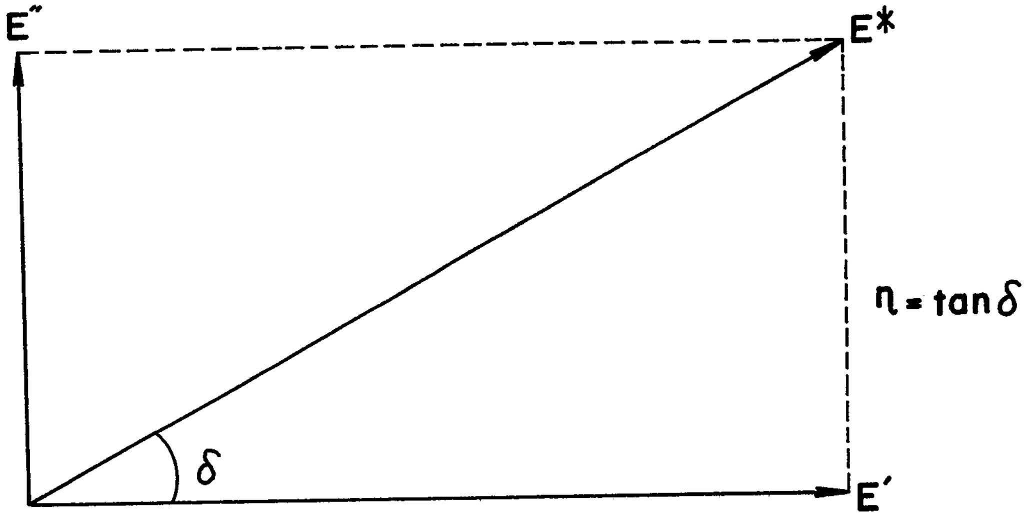

# INTERNATIONAL SEARCH REPORT

International Application No PCT/JP88/00380

**I. CLASSIFICATION OF SUBJECT MATTER** (if several classification symbols apply, indicate all) [6]

According to International Patent Classification (IPC) or to both National Classification and IPC

Int. $Cl^4$ C08L71/00, C08G59/40

**II. FIELDS SEARCHED**

Minimum Documentation Searched [7]

| Classification System | Classification Symbols |
|---|---|
| IPC | C08L71/00, C08G59/40 |

Documentation Searched other than Minimum Documentation to the Extent that such Documents are Included in the Fields Searched [8]

| | |
|---|---|
| Jitsuyo Shinan Koho | 1926 - 1988 |
| Kokai Jitsuyo Shinan Koho | 1971 - 1988 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 60-124466 (Kubotaka Paint Co., Ltd.) 3 July, 1985 (03.07.85) Page 1, lower left column, line 5 to page 3, lower left column, line 15 (Family: none) | 1-2 |
| A | JP, A, 61-293250 (Mitsui Toatsu Chemicals, Inc.) 24 December, 1986 (24.12.86) Page 1, lower left column, line 5 to page 3, lower left column, line 7 (Family: none) | 1-2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| July 6, 1988 (06.07.88) | July 18, 1988 (18.07.88) |
| **International Searching Authority** | **Signature of Authorized Officer** |
| Japanese Patent Office | |